(19) Europäisches Patentamt
European Patent Office
Office européen des brevets

(11) EP 4 667 444 A1

(12) EUROPEAN PATENT APPLICATION

(43) Date of publication:
**24.12.2025 Bulletin 2025/52**

(21) Application number: **24183382.1**

(22) Date of filing: **20.06.2024**

(51) International Patent Classification (IPC):
***C04B 40/00*** *(2006.01)* ***C04B 103/00*** *(2006.01)*

(52) Cooperative Patent Classification (CPC):
(C-Sets available)
**C04B 40/0042;** C04B 2103/0057 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Sika Technology AG**
**6340 Baar (CH)**

(72) Inventors:
- **HONERT, Dieter**
  **69234 Dielheim (DE)**
- **SAHINAGIC, Rasid**
  **6423 Seewen (CH)**
- **DIMITRAKOPOULOU, Ariadni**
  **69226 Nussloch (DE)**
- **MÜLLER, Thomas**
  **69207 Sandhausen (DE)**

(74) Representative: **Sika Patent Attorneys**
**C/o Sika Technology AG**
**Corp. IP Dept.**
**Tüffenwies 16**
**8048 Zürich (CH)**

# (54) WATERGLASS FOR USE IN THE SPRAY-DRYING OF COMB POLYMER SOLUTIONS

(57) A process for the production of a solid dispersant for a hydraulically setting composition, comprises the steps of:
a) providing or preparing a solution comprising at least one comb polymer having a polymer backbone comprising carboxyl groups;
b) spray-drying the solution in the presence of water glass to obtain the solid dispersant.



Processed by Luminess, 75001 PARIS (FR)

(Cont. next page)

(52) Cooperative Patent Classification (CPC): (Cont.)

C-Sets
**C04B 40/0042, C04B 12/04, C04B 24/2647;**
**C04B 40/0042, C04B 12/04, C04B 24/2658;**
**C04B 40/0042, C04B 24/2605, C04B 2103/0094**

## Description

### Technical field

The invention relates to a process for the production of comb polymer-based solid dispersants for a hydraulically setting composition by spray-drying, and to solid dispersants for a hydraulically setting composition. Furthermore, the invention relates to the targeted use of water glass before and/or during spray-drying of comb polymers.

### Background art

Dispersants are important additives for hydraulically setting compositions, such as mortar or concrete. They are added to improve the workability of hydraulically setting compositions as well as the mechanical properties of the resulting concrete. An important class of dispersants are plasticizers. Plasticizers are added in order to reduce the water content and/or to improve workability of hydraulically setting compositions. By reducing the water content, for example, mortars or concretes with improved mechanical properties, such as compressive strength, and increased resistance against ingress of liquids are obtainable.

An important class of highly efficient dispersants with plasticizing properties are organic comb polymers with a polycarboxylate backbone. The polycarboxylate backbone is covalently linked to side chains e.g. by ether, ester and/or amide bonds. The side chains usually comprise polyether groups. Such dispersants are also referred to as polycarboxylate ethers or esters (PCE) or as superplasticizers.

The building industry requires large amounts of such comb polymer superplasticizers. These comb polymers usually are synthesized in aqueous solution.

Such comb polymers are highly hydrophilic. Upon removal of water from an aqueous comb polymer solution, a waxy or syrup-like composition is obtained. Such a waxy composition is not well suited for technical application, because the workability is low and partitioning and distribution of the polymer into a hydraulically setting composition is difficult and time-consuming. Therefore, many of the commercially available comb polymers superplasticizers are provided in the form of aqueous solutions.

For transport or storage, it would however be desirable to provide such superplasticizers in a dry solid state, such as a powder or granulate. In view of the overall high amounts of superplasticizers required for mortar or concrete production, a solid superplasticizer would significantly reduce the costs for transport and storage and the ease of handling.

In the prior art, various approaches have been described to obtain dry solid comb polymer compositions.

For example, EP 2 742 013 B1 (Sika Technology AG) describes the production of a solid dispersant for a hydraulically setting composition, comprising the steps of a) providing at least one first polymer, which is a comb polymer having a polymer backbone comprising carboxyl groups, b) providing at least one second polymer, which is a condensate of, at least, an aromatic compound and formaldehyde; or a lignosulfonate, c) preparing an aqueous solution comprising the first and the second polymer, and d) spray-drying the aqueous solution to obtain the solid dispersant. Thereby, the comb polymer provided in step a) is at least partially neutralized, because the solubility in aqueous solution is higher and the ionic carboxyl groups are advantageous for the dispersant function.

Also, EP 1 829 839 A1 (Sika Ltd.; Toho Chemical Industry Co., Ltd) describes a process in which a solution or dispersion of a polycarboxylic acid-based copolymer is obtained and subsequently, to the solution or dispersion, an inorganic powder is added to obtain a mixture. By adding an inorganic powder, the solution or dispersion is neutralized, so that the spray-drying can be more effectively performed. Examples of the inorganic powder include lithium carbonate, potassium sulfate, sodium sulfate, aluminum sulfate, zeolite, calcium hydroxide, magnesium hydroxide, aluminum hydroxide, or a silica powder. Among them, calcium hydroxide and magnesium hydroxide are most preferred.

However, caking effects in the spray chamber as well as poor flowability of the spray-dried dispersants are common problems with spray-drying of comb polymers with a polycarboxylate backbone. Also, additives such as calcium hydroxide and magnesium hydroxide used in these processes are highly caustic, rather difficult to dose, and render comb polymers solutions unstable.

There is thus still a need to develop new and improved solutions, which reduce or overcome the aforementioned drawbacks.

### Disclosure of the invention

It is an object of the present invention to provide solutions that allow to overcome the above-mentioned drawbacks at least partly. In particular, solutions for providing solid dispersants for hydraulically setting compositions should be made available, whereby the dispersants are based on comb polymers having a polymer backbone comprising carboxyl groups. Furthermore, solid dispersants based on such comb polymers with properties as good as possible should be provided.

Surprisingly, it has been found that the problem of the invention can be solved by a process according to claim 1. Thus, in a first aspect, the invention is related to a process for the production of a solid dispersant for a hydraulically setting composition, comprising the steps of:

a) providing or preparing a solution comprising at least one comb polymer having a polymer backbone comprising carboxyl groups;

b) spray-drying the solution in the presence of water glass to obtain the solid dispersant.

As has been shown, the water glass is a highly efficient anticaking agent that helps to reduce caking effects in the spray chamber. Simultaneously, the water glass remarkably enhances flowability of the spray-dried solid dispersants.

Also, due to its slightly alkaline character, the water glass can be used to neutralize the at least one comb polymer, in particular directly in the solution of step a). Thereby, highly stable solutions are obtainable, which can be stored for long terms without thickening or segregating before spray-drying. This allows for a more flexible production since step b) can be performed within a rather broad time period.

An additional advantage is that the water glass does not impair the dispersing or plasticizing effect of the spray-dried solid dispersants. Nevertheless, it allows the production of spray-dried solid dispersants with free-flowing properties and high melting points. This is in particular important for the dry-mix mortar industry where raw materials such as dispersants usually are directly dosed from large silos which are exposed to changing temperatures.

Further aspects of the invention are the subject matter of other independent claims. Especially preferred embodiments of the invention are outlined throughout the description and form the subject matter of the dependent claims.

**Ways of carrying out the invention**

A first aspect of the invention relates to a process for the production of a solid dispersant for a hydraulically setting composition, comprising the steps of:

a) providing or preparing a solution comprising at least one comb polymer having a polymer backbone comprising carboxyl groups;

b) spray-drying the solution in the presence of water glass to obtain the solid dispersant.

According to the invention, a "dispersant" in particular is an additive for a hydraulically setting composition that is capable of improving the workability of the hydraulically setting composition and/or of reducing the water demand of such a composition. Workability of hydraulically setting compositions can, for example, be measured according to standard DIN EN 1015-3:2005-05. An improvement means a higher flow in this test in relation to a reference. A reduction of water demand means that the same workability can be achieved when adding less water as compared to a reference.

According to the invention, a "hydraulically setting composition" is a composition, which comprises a binder, which hardens in the presence of water. Such compositions and binders are well-known to the skilled person in the technical field of construction. Such binders are typically mineral binders. A mineral binder is a binder, which, in the presence of water reacts in a hydration reaction to form solid hydrates or hydrate phases. For example, the binder is a hydraulic binder, a latent hydraulic binder, a pozzolanic binder and/or binder with combined properties.

Preferably, the binder is selected from the group consisting of cement, gypsum, lime, slag, fly ash, trass, rice husk ash, fired clay and/or slate.

A solution comprising at least one comb polymer having a polymer backbone comprising carboxyl groups within the present context preferably is a solution in water. The term solution in this context is meant to also encompass dispersions.

In step b), the solution comprising the at least one comb polymer is spray-dried in the presence of water glass to obtain the solid dispersant. In particular, this means that the spray drying is performed such that the polymer is in physical contact with the water glass during the spray-drying process. Thereby, especially, the water glass and the at least one comb polymer can be brought in contact with each other before and/or during the spray drying. This can be achieved in several ways, as explained in the following.

According to a preferred embodiment, the water glass is provided as a component of the solution of step a), and wherein the solution comprising the at least one comb polymer and the water glass is spray-dried in step b). In this case, the water glass can be mixed with the solution of the polymer bevor step b). Thereby, preferably, the water glass is provided as an aqueous solution as described above. For example, the aqueous solution of the water glass is mixed with the solution comprising the at least one comb polymer to obtain a single solution comprising the water glass and the at least one comb polymer. In this manner a homogeneous solution of water gloss and the at least one comb polymer can be spray-dried in

step b) resulting in a highly homogeneous solid dispersant.

According to a further preferred embodiment, in step b), the solution comprising the at least one comb polymer, and optionally a portion of the water glass, is dispersed with a spray nozzle to form a first spray and at least a further portion of the water glass, especially all the water glass, is dispersed with a second spray nozzle to form a second spray that, at least in a section, penetrates the first spray. This represents a very versatile implementation of the process according to the invention. Thereby the proportions of the water glass and the solution comprising the at least one comb polymer can be changed in a highly flexible manner at any time, even during the process.

In another preferred embodiment, before and/or during step b), an interior area of the spray-drying device used for performing the process according to the invention is coated with at least a portion of the water glass, in particular with all the water glass, especially by spraying, and in step b) the solution comprising at least one comb polymer is sprayed onto said interior area.

Without wishing to be bound by the theory, it is believed that upon contact of the sprayed polymers with the water glass, water glass adheres on the surface of the solid dispersant particles formed during the spraying. Thereby, an outer layer of the solid dispersant particles containing water glass is formed.

In step b), the aqueous solution of step a) is spray-dried. Spray-drying is a known method for producing a dry particulate material, especially a dry powder, from a liquid by spraying in combination with rapidly drying the solution with a hot gas. The process is carried out in a spray-dryer apparatus. The liquid is dispersed with a spray nozzle or an atomizer.

Preferably, the aqueous solution is pre-heated before entering the spray dryer. The spray-drying may be carried out at an inlet temperature between 100 and 300°C, preferably between 150 and 250°C. The outlet temperature may be between 80 and 200° C, more preferably between 120 and 150° C. The resulting particulate product may be sieved in order to remove small agglomerates, which might potentially be formed.

According to the inventive process, a dry powder can be obtained, which has a good flowability. This was surprising, because the comb polymer itself, i.e. the polycarboxylate esters or ethers, hardly are spray-dryable from aqueous solutions. When attempting spray-drying aqueous solutions of comb polymers without water glass, at best wax-like products were obtained.

In preferred embodiments of the invention, the solid dispersant obtained is a powder. The powder may be converted into another solid form, for example by pressing. Thus the inventive solid dispersant may also be a granulate, a shaped block, a tab or the like.

In particular, the overall particle size of the solid dispersant obtained in step b) (of at least 98% of the particles) is below 700 μm, preferably below 500 μm, or more preferably below 400 μm. The particle size can be measured by laser diffraction, preferably with a Mastersizer 2000 device (trademark of Malvern Instruments Ltd, GB). In a preferred embodiment, the average particle size (d50%) is between 40 μm and 500 μm, more preferably between 100 μm and 400 μm.

Especially, with respect to a total weight of the at least one comb polymer, a weight proportion of the water glass is from 0.01 - 20 wt.%, especially 0.1 - 15 wt.%, in particular 0.2 - 10 wt.%, preferably 0.3 - 5 wt.%, highly preferred 0.5 - 4 wt.%, for example 0.7 - 3 wt.%. This in particular is meant to be the weight proportion of the water glass in the solid dispersant obtained.

"Water glass", also known as sodium silicate, is a compound with the formula $(Na_2O)_x \cdot (SiO_2)_y$. These are ionic compounds usually consisting of sodium cations and polymeric silicate anions. Water glass is generally a colorless transparent solid or white powder, and soluble in water in various amounts.

In particular, a molar ratio of $SiO_2$ : $Na_2O$ of the water glass is from 2 - 3.75, especially from 2.1 - 3.0, in particular from 2.3 - 2.9 or 2.4 - 2.8. With these molar ratios, the advantages according to the invention are particularly pronounced.

Further preferred, the water glass is provided as an aqueous solution with a solid content of 35 - 60 wt.%, especially 42 - 48 wt.%. This allows for homogeneously mixing the water glass with the solution comprising the polymer before and/or during step b). However, e.g. for special applications, other forms of water glass might be suitable used as well.

Preferably, the solution comprising the at least one comb polymer has a polymer content of 20 - 70 wt.%, especially 35 - 55 wt.%. The aqueous solution may comprise other soluble additives.

The solution comprising the at least one comb polymer, may comprise exactly one comb polymer or a mixture of two or more different comb polymers. Optionally, further polymers, which need not be comb polymers, may be present as well.

Usually, solutions of the respective comb polymers comprise small amounts of additives. Additives may be residual chemicals or side products from the production process, or substances which stabilize comb polymer solutions. For example, the additives might be salts, especially buffer salts, alcohols, polysaccharides or sulfonate salts. The additives might be functional additives, such as antifoaming agents and/or colorants. Preferably, the content of solid additives is below 10 wt.%, more preferably below 5 wt.% or below 3 wt.%, with respect to the total weight of the solid dispersant obtained.

Further preferred, the solution comprising the at least one comb polymer is an aqueous solution, especially with a

pH in the range of 5 - 9, in particular 6 - 8 or 6.5 - 7.5.

According to a special embodiment, the process according to the invention further comprising a step of adjusting the pH of the solution of step a) by adding at least a portion, especially all of the water glass, especially such that the solution after addition of the water glass has a pH in the range of 5 - 9, in particular 6 - 8 or 6.5 - 7.5.

In this manner, the pH of the solution can be adjusted without need for any additional, potentially problematic, substances. Thus, according to a further preferred embodiment no oxides and/or hydroxides of alkali metals, alkali earth metals or mixtures thereof, in particular no NaOH, KOH, MgO, $Mg(OH)_2$, CaO, and/or $Ca(OH)_2$, are added to the solution comprising the at least one comb polymer and/or the water glass before and/or during the process.

Consequently with this embodiment, the solution comprising the at least one comb polymer and/or the water glass do not comprise oxides and/or hydroxides of alkali metals, alkali earth metals or mixtures thereof, in particular no NaOH, KOH, MgO, $Mg(OH)_2$, CaO, and/or $Ca(OH)_2$.

Especially, the spray-drying in step b) is performed at a temperature of at least 100°C or more, in particular at least 150°C, especially at least 200°C. This helps to reduce the humidity in the solid dispersant obtained.

Especially, the spray-drying in step b) is performed such that, with respect to the total weight of the solid dispersant obtained, a residual water content in the obtained solid dispersant is from 0 - 5 wt.%, especially 0 - 3 wt.%, particularly 0 - 2 wt.% or 0 - 1 wt.%.

In particular, the comb polymer has a polycarboxylate backbone and polyether side chains, wherein the polyether side chains are bound via ester, ether and/or amide groups to the polycarboxylate backbone.

Preferably, the comb polymer comprises or consists of the following partial structural units:

a) a mole fractions of a partial structural unit S1 of formula (I)

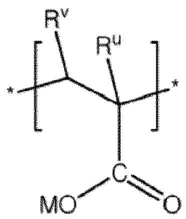

(I)

b) b mole fractions of a partial structural unit S2 of formula (II)

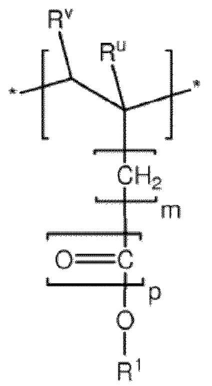

(II)

c) c mole fractions of a partial structural unit S3 of formula (III)

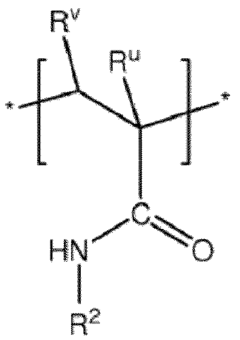

(III)

d) d mole fractions of a partial structural unit S4 of formula (IV)

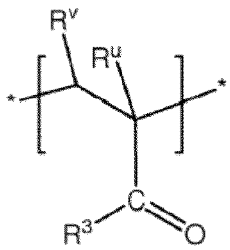

(IV)

where

M independently of one another represents $H^+$, an alkali metal ion, an alkaline earth metal ion, a bivalent or trivalent metal ion, an ammonium ion or an organic ammonium group,

each $R^u$ independently of the others stands for hydrogen or a methyl group,

each $R^v$ independently one another stands for hydrogen or COOM,

m = 0, 1 or 2,

p = 0 or 1,

$R^1$ and $R^2$ independently of one another stand for a $C_1$ to $C_{20}$ alkyl group, cycloalkyl group, alkylaryl group or for $-[AO]_n-R^4$,

where A = $C_2$ to $C_4$ alkylene, $R^4$ stands for H, a $C_1$ to $C_{20}$ alkyl group, cyclohexyl group or alkylaryl group,

and n = 2-250,

$R^3$ independently of one another stand for $NH_2$, $-NR^5R^6$, $-OR^7NR^8R^9$,

where $R^5$ and $R^6$ independently of one another stand for a $C_1$ to $C_{20}$ alkyl group, cycloalkyl group, alkylaryl group or aryl group, or they stand for a hydroxyalkyl group or for an acetoxyethyl ($CH_3$-CO-O-$CH_2$-$CH_2$-) or a hydroxy-isopropyl (HO-CH($CH_3$)-$CH_2$-) or an acetoxyisopropyl group ($CH_3$-CO-O-CH($CH_3$)-$CH_2$-); or $R^5$ and $R^6$ together form a ring of which the nitrogen is a part, in order to construct a morpholine or imidazoline ring;

$R^7$ is a $C_2$-$C_4$ alkylene group,

$R^8$ and $R^9$ each represent independently of one another a $C_1$ to $C_{20}$ alkyl group, cycloalkyl group, alkylaryl group, aryl group or a hydroxyalkyl group,

and where a, b, c and d represent mole fractions of the respective partial structural units S1, S2, S3 and S4, with a/b/c/d = (0.1 - 0.9) / (0.1 - 0.9) / (0 - 0.8) / (0 - 0.8), in particular a/b/c/d = (0.3 - 0.9) / (0.1 - 0.7) / (0 - 0.6) / (0 - 0.4), preferably a/b/c/d = (0.5 - 0.8) / (0.2 - 0.4) / (0.001 - 0.005) / 0 and under the condition that a + b + c + d = 1.

The sequence of the partial structural units S1, S2, S3 and S4 can be alternatingly, block-like or random. In principle, it is also possible for additional structural units to be present in addition to the partial structural units S1, S2, S3 and S4.

It is preferable for the partial structural units S1, S2, S3 and S4 together to constitute a content by weight of at least 50 wt.%, in particular at least 90 wt.%, and most particularly preferably at least 95 wt.%, with respect to the total weight of the comb polymer.

The manufacture of comb polymers itself is known to the person skilled in the art and it can be carried out, for example, by radical polymerization of the corresponding monomers of formula ($I_m$), ($II_m$), ($III_m$) and ($IV_m$), respectively, which leads to a comb polymer KP with the partial structural units S1, S2, S3 and S4. The residues $R^u$, $R^v$, $R^1$, $R^2$, $R^3$, M, m and p here are as defined.

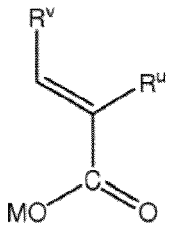 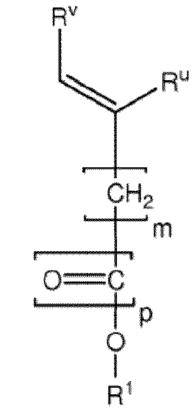 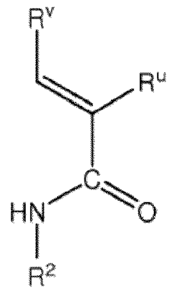 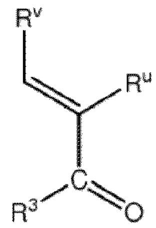

(Im) (IIm) (IIIm) (IVm)

It is also possible to prepare the copolymers by polymer-analogue reaction of a polycarboxylic acid of formula (V).

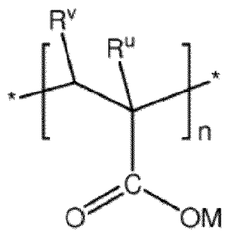 (V).

In the polymer-analogue reaction, the polycarboxylic acid of formula (V) is esterified or amidated with the corresponding alcohols or amines (for example, $HO-R^1$, $H_2N-R^2$, $H-R^3$) and then, if necessary, neutralized or partially neutralized (depending on the type of the residue M, for example, with metal hydroxides or ammonia). Details regarding the polymer-analogue reaction are disclosed, for example, in EP 1 138 697 B1 on page 7, line 20 to page 8, line 50, as well as in its examples, or in EP 1 061 089 B1 on page 4, line 54 to page 5, line 38 as well as in its examples. The disclosure of these mentioned patents is hereby included in particular by reference.

Corresponding comb polymers are also commercially marketed by Sika Schweiz AG under the commercial name ViscoCrete®.

Especially, $R^v$ represents in particular hydrogen and $R^u$ stands preferably for hydrogen and/or a methyl group.

Further preferred are comb polymers with m = 0 and p = 1; or m = 1-2 and p = 0.

In particular $R^v$ is equal to hydrogen, $R^u$ stands for a methyl group, m = 1-2 and p = 0.

$R^1$ and/or $R^2$ stand, in each case independently of one another, advantageously for $-[AO]_n-R^4$ where n = 8-200, in particular 20-70, and A stands for $C_2$ to $C_4$ alkylene.

$R^4$ is, in each case independently of one another, preferably hydrogen or a methyl group.

It is particularly preferable to use polycarboxylates or comb polymers where:

a) the residues $R^u$ and $R^v$ stand for hydrogen,

b) m = 0,

c) p = 1,

d) $R^1$ and $R^2$, in each case independently of one another, stand for $-[AO]_n-R^4$ where n = 20-70 and A = $C_2$ alkylene,

e) $R^4$ represents a methyl group and/or

f)

$$a/b/c/d = (0.5 - 0.8) / (0.2 - 0.4) / (0.001 - 0.005) / 0$$

It is also advantageous to use comb polymers or polycarboxylates where:

a) p = 0 and m = 1-2,

b) $R^1$, in each case independently of one another, stands for -$[AO]_n$-$R^4$ where n = 8-200, in particular 20-70,

c) $R^4$ stands for hydrogen or a methyl group, in particular hydrogen,

d) and/or A stands for $C_2$ to $C_4$ alkylene, in particular a $C_2$ alkylene.

A weight average molecular weight ($M_w$) of the comb polymer is in particular 5,000-150,000 g/mol, preferably 10,000-100,000 g/mol, especially 20,000-90,000 g/mol. The weight average molecular weight ($M_w$) is determined by gel permeation chromatography (GPC), wherein polyethylene glycol (PEG) is used as standard.

Another aspect of the present invention is directed to a solid dispersant for a hydraulically setting composition comprising at least one comb polymer having a polymer backbone comprising carboxyl groups, and water glass. The polymer and the water glass in particular are defined as described above in connection with the process according to the invention. Especially, the solid dispersant is obtainable or obtained by the above described process.

In particular, the solid dispersant is a particulate solid material, especially a powdery material.

With respect to a total weight of the at least one comb polymer, a weight proportion of the water glass is from 0.01 -20 wt.%, especially 0.1 - 15 wt.%, in particular 0.2 - 10 wt.%, preferably 0.3 - 5 wt.%, highly preferred 0.5 - 4 wt.%, for example 0.7 - 3 wt.%.

Especially, with respect to the total weight of the solid dispersant, a residual water content in the obtained solid dispersant is from 0 - 5 wt.%, especially 0 - 3 wt.%, particularly 0 - 2 wt.% or 0 - 1 wt.%.

Preferably, the solid dispersant does not comprise any oxides and/or hydroxides of alkali metals, alkali earth metals or mixtures thereof, in particular no NaOH, KOH, MgO, $Mg(OH)_2$, CaO, and/or $Ca(OH)_2$.

However, the solid dispersant may comprise additives which may be residual chemicals or side products from the production process, or substances which stabilize comb polymers. For example, the additives might be salts, especially buffer salts, alcohols, polysaccharides or sulfonate salts. The additives might be functional additives, such as antifoaming agents and/or colorants. Preferably, the content of solid additives is below 10 wt.%, more preferably below 5 wt.% or below 3 wt.%, with respect to the total weight of the solid dispersant.

Preferably, the overall particle size of the solid dispersant (of at least 98% of the particles) is below 700 $\mu$m, preferably below 500 $\mu$m, or more preferably below 400 $\mu$m. In a preferred embodiment, the average particle size (d50%) is between 40 $\mu$m and 500 $\mu$m, more preferably between 100 $\mu$m and 400 $\mu$m.

In an additional aspect, the invention is directed to the use of water glass for adjusting, especially neutralizing, a pH of a solution comprising at least one comb having a polymer backbone comprising carboxyl groups. Thereby, highly stable solutions are obtainable, which can be stored for a long term without thickening or segregating before spray-drying.

Due to its slightly alkaline character, the water glass can be used in a targeted manner to neutralize the at least one comb polymer in a much better controllable and safer manner when compared to other substances such as highly caustic substances.

A further aspect of the invention is directed to the use of water glass as an anticaking agent for a comb polymer having a polymer backbone comprising carboxyl groups. As has been shown, the water glass is a highly efficient anticaking agent that helps to enhance flowability of the spray-dried solid dispersants.

A still further aspect of the present invention is related to a use of water glass, especially in combination with water as a solvent, as a spraying agent for spray-drying a comb polymer having a polymer backbone comprising carboxyl groups.

Especially, the spraying agent affects the spray formation, the drying characteristics, the morphology, particle size, and/or stability of the dried solid dispersant.

Further advantageous embodiments and combinations of features of the invention will emerge from the following exemplary embodiments and the totality of the patent claims.

## Exemplary embodiments

Neutralization tests

An aqueous solution of a comb polymer (Sika® Viscocrete®-610 SC, available form Sika, Switzerland; solid content: 40 wt.%) was provided. Sika® Viscocrete®-610 SC is a comb polymer with a polymer backbone comprising carboxyl groups and polyethylene glycol side chains. The initial pH of the aqueous comb polymer solution was about 4.1.

Subsequently, in a conventional reactor with a paddle stirrer, an aqueous solution of sodium water glass **NaS** (NAVS 48; obtained from Silkem d.o.o, Slovenia; molar ratio of $SiO_2$ : $Na_2O$ = 2.42; solid content = 45 wt.%) was mixed with the comb polymer solution for 20 minutes until a homogenous mixture has been obtained. The proportions of the water

glass used and the pH obtained are indicated in table 1.

*Table 1: Neutralization of comb polymer with water glass (**NaS**).*

| **No.** | **NaS# [wt.%]** | **pH** | **Stability** |
|---|---|---|---|
| **A** | 1.0 | 7.1 | Viscosity and pH remain stable for more than 24 hours; no bottom set observed |
| **B** | 2.0 | 7.0 | Viscosity and pH remain stable for more than 24 hours; no bottom set observed |
| **C** | 3.9 | 7.2 | Viscosity increase within hours; after 4 days, a gel-like bottom set has formed |
| **D** | 5.0 | 7.0 | Segregation of the solution after 4 days; gel-like consistency |
| **E** | 7 | 7.0 | Segregation of the solution after 4 days; gel-like consistency |
| **F** | 13.5 | 6.7 | Segregation of the solution after 4 days; gel-like consistency |
| # = wt % with respect to total weight of the sodium water glass (s.c.) and the comb polymer (s.c.). | | | |

As evident from table 1, waster glass can be used for neutralization of comb polymers, Thereby, highly stable solutions are obtainable, which can be stored for at least several hours to several days without thickening or segregating. In this manner, the pH of dissolution can be adjusted without need for any additional problematic substances such as e.g. NaOH, KOH, MgO, $Mg(OH)_2$, CaO, and/or $Ca(OH)_2$.

Producing solid dispersants by spray-drying

Samples of the solutions **A - F** of table 1 have been spray dried immediately after mixing. Before spray drying, the mixtures were slightly heated to 40°C to decrease viscosity during spray-drying. Spray-drying was performed at 200°C inlet temperature. The resulting product passed through a sieve to separate eventually formed waxy or syrupy parts.

The so obtained dry solid dispersants **A'** - **F'** contained less than 2 wt.% residual water, with respect to the total weight of the solid dispersant and, after cooling to room temperature, were available as fine powder products.

Spray-drying of the comb polymers without water glass resulted in increased caking in the spray chamber and a reduced flowability of the spray-dried products. In fact, the so obtained products were rather sticky and had a tendency to form lumps. Thus, these experiments clearly show that water glass is a highly efficient anticaking agent that helps to reduce caking effects in the spray chamber. Simultaneously, the water glass remarkably enhances flowability of the spray-dried solid dispersants.

Tests in mortar compositions

Mortar compositions **M1** - **M6** were prepared with the various solid dispersants **A'** - **F'** produced in the above-described process. Thereby, samples with 469 g cement (CEM II A-S 42.5), 266 g limestone powder, 763 g sand (0-2 mm), and 1.5 g spray dried dispersant **A'** - **F'** (cf. table 2) were produced by mixing the various constituents in a Hobart type mixer for 3 minutes. The water to cement ratio was 0.4.

Workability of mortars were carried out according to standard DIN EN 1015-3:2007-05 using a Hägermann cone (upper diameter: 70 mm, lower diameter: 100 mm, height: 60 mm) without strokes of the table. Specifically, the fresh mortar samples were filled in the cone and the cone was lifted carefully to allow the paste to flow freely on a horizontally aligned plane. Two perpendicular diameters of the spread flow were measured, and their mean was regarded as the spread flow diameter. The results are summarized in table 2.

*Table 2: Flow properties of mortar samples prepared with spray-dried dispersants.*

| | **M1** | **M2** | **M3** | **M4** | **M5** | **M6** |
|---|---|---|---|---|---|---|
| Dispersant | **A'** | **B'** | **C'** | **D'** | **E'** | **F'** |
| Initial flow [mm] | 327 | 320 | 314 | 330 | 324 | 294 |
| Flow after 30 min | 167 | 158 | 125 | 172 | 148 | 108 |
| Flow after 60 min | 101 | 101 | 100 | 102 | 100 | n. m. |
| n.m.: not measurable | | | | | | |

As evident from table 2, examples **M1** - **M2** show rather goof flow properties. However, with example **M6,** the flow

is somewhat lower and decreases faster over time.

It will be appreciated by those skilled in the art that the present invention can be embodied in other specific forms without departing from the spirit or essential characteristics thereof. The presently disclosed embodiments are therefore considered in all respects to be illustrative and not restricting.

## Claims

1. A process for the production of a solid dispersant for a hydraulically setting composition, comprising the steps of:

   a) providing or preparing a solution comprising at least one comb polymer having a polymer backbone comprising carboxyl groups;
   b) spray-drying the solution in the presence of water glass to obtain the solid dispersant.

2. The process according to claim 1, wherein the water glass is provided as a component of the solution of step a), and wherein the solution comprising the at least one comb polymer and the water glass is spray-dried in step b).

3. The process according to any of preceding claims, wherein, with respect to a total weight of the at least one comb polymer, a weight proportion of the water glass is from 0.01 - 20 wt.%, especially 0.1 - 15 wt.%, in particular 0.2 - 10 wt.%, preferably 0.3 - 5 wt.%, highly preferred 0.5 - 4 wt.%, for example 0.7 - 3 wt.%.

4. The process according to any of preceding claims, wherein a molar ratio of $SiO_2 : Na_2O$ of the water glass is from 2-4, especially from 2.1 - 3.0, in particular from 2.3 - 2.9 or 2.4 - 2.8.

5. The process according to any of preceding claims, wherein the water glass is provided as an aqueous solution with a solid content of 35 - 60 wt.%, especially 42 - 48 wt.%.

6. The process according to any of preceding claims, wherein the solution comprising the at least one comb polymer has a polymer content of 20 - 70 wt.%, especially 35 - 55 wt.%.

7. The process according to any of preceding claims, wherein the spray-drying in step b) is performed at a temperature of at least 100°C or more, in particular at least 150°C, especially at least 200°C.

8. The process according to any of preceding claims, wherein the spray-drying in step b) is performed such that, with respect to the total weight of the solid dispersant obtained, a residual water content in the obtained solid dispersant is from 0 - 5 wt.%, especially 0 - 3 wt.%, particularly 0 - 2 wt.%.

9. The process according to any of preceding claims, wherein the solution comprising the at least one comb polymer is an aqueous solution, especially with a pH in the range of 5 - 9, in particular 6 - 8 or 6.5 - 7.5.

10. The process according to any of preceding claims, further comprising a step of adjusting the pH of the solution of step a) by adding at least a portion, especially all of the water glass, especially such that the solution after addition of the water glass has a pH in the range of 5 - 9, in particular 6 - 8 or 6.5 - 7.5.

11. The process according to any of preceding claims, wherein no oxides and/or hydroxides of alkali metals, alkali earth metals or mixtures thereof, in particular no NaOH, KOH, MgO, $Mg(OH)_2$, CaO, and/or $Ca(OH)_2$, are added to the solution comprising the at least one comb polymer and/or the water glass before and/or during the process.

12. The process according to any of preceding claims, wherein the comb polymer comprises of the following partial structural units:

   a) a mole fractions of a partial structural unit S1 of formula (I)

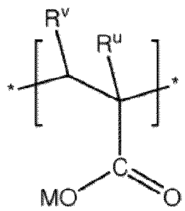

(I)

b) b mole fractions of a partial structural unit S2 of formula (II)

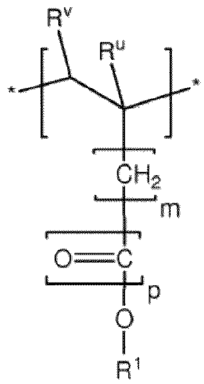

(II)

c) c mole fractions of a partial structural unit S3 of formula (III)

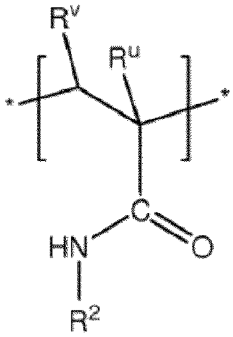

(III)

d) d mole fractions of a partial structural unit S4 of formula (IV)

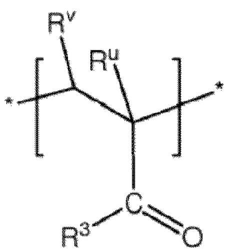

(IV)

where

M independently of one another represents $H^+$, an alkali metal ion, an alkaline earth metal ion, a bivalent or trivalent metal ion, an ammonium ion or an organic ammonium group,
each $R^u$ independently of the others stands for hydrogen or a methyl group,
each $R^v$ independently one another stands for hydrogen or COOM,
m = 0, 1 or 2,
p = 0 or 1,
$R^1$ and $R^2$ independently of one another stand for a $C_1$ to $C_{20}$ alkyl group, cycloalkyl group, alkylaryl group or for $-[AO]_n-R^4$,

where A = $C_2$ to $C_4$ alkylene, $R^4$ stands for H, a $C_1$ to $C_{20}$ alkyl group, cyclohexyl group or alkylaryl group, and n = 2-250,

$R^3$ independently of one another stand for $NH_2$, $-NR^5R^6$, $-OR^7NR^8R^9$,
where $R^5$ and $R^6$ independently of one another stand for a $C_1$ to $C_{20}$ alkyl group, cycloalkyl group, alkylaryl group or aryl group, or they stand for a hydroxyalkyl group or for an acetoxyethyl ($CH_3$-CO-O-$CH_2$-$CH_2$-) or a hydroxy-isopropyl (HO-CH($CH_3$)-$CH_2$-) or an acetoxyisopropyl group ($CH_3$-CO-O-CH($CH_3$)-$CH_2$-); or $R^5$ and $R^6$ together form a ring of which the nitrogen is a part, in order to construct a morpholine or imidazoline ring;
$R^7$ is a $C_2$-$C_4$ alkylene group,
$R^8$ and $R^9$ each represent independently of one another a $C_1$ to $C_{20}$ alkyl group, cycloalkyl group, alkylaryl group, aryl group or a hydroxyalkyl group,
and where a, b, c and d represent mole fractions of the respective partial structural units S1, S2, S3 and S4, with
a/b/c/d = (0.1 - 0.9) / (0.1 - 0.9) / (0 - 0.8) / (0 - 0.8), in particular a/b/c/d = (0.3 - 0.9) / (0.1 - 0.7) / (0 - 0.6) / (0 - 0.4), preferably a/b/c/d = (0.5 - 0.8) / (0.2 - 0.4) / (0.001 - 0.005) / 0 and under the condition that a + b + c + d = 1.

**13.** A solid dispersant for a hydraulically setting composition comprising at least one comb polymer having a polymer backbone comprising carboxyl groups, and water glass.

**14.** Use of water glass for adjusting, especially neutralizing, a pH of a solution comprising at least one comb polymer having a polymer backbone comprising carboxyl groups.

**15.** Use of water glass as an anticaking agent for a comb polymer having a polymer backbone comprising carboxyl groups.

**16.** Use of water glass, especially in combination with water as a solvent, as a spraying agent for spray-drying a comb polymer having a polymer backbone comprising carboxyl groups.

Europäisches Patentamt
European Patent Office
Office européen des brevets

# EUROPEAN SEARCH REPORT

Application Number
EP 24 18 3382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/164478 A1 (FIEDLER WOLFGANG [DE] ET AL) 4 September 2003 (2003-09-04)<br>* paragraph [0001] - paragraph [0056] *<br>----- | 1-16 | INV.<br>C04B40/00<br>C04B103/00 |
| Y | US 2015/368409 A1 (PAKUSCH JOACHIM [DE] ET AL) 24 December 2015 (2015-12-24)<br>* paragraph [0001] - paragraph [0131] *<br>----- | 1-16 | |

TECHNICAL FIELDS SEARCHED (IPC)

C04B

The present search report has been drawn up for all claims

1

| Place of search | Date of completion of the search | Examiner |
|---|---|---|
| Munich | 16 December 2024 | Kresoja, Radoje |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 18 3382

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2024

| Patent document cited in search report | Publication date | Patent family member(s) | Publication date |
|---|---|---|---|
| US 2003164478 A1 | 04-09-2003 | AT E318284 T1 | 15-03-2006 |
| | | DE 10049127 A1 | 18-04-2002 |
| | | EP 1325068 A1 | 09-07-2003 |
| | | JP 2004511599 A | 15-04-2004 |
| | | TW 553989 B | 21-09-2003 |
| | | US 2003164478 A1 | 04-09-2003 |
| | | WO 0231036 A1 | 18-04-2002 |
| US 2015368409 A1 | 24-12-2015 | AU 2014234553 A1 | 24-09-2015 |
| | | CN 105073842 A | 18-11-2015 |
| | | EP 2976379 A1 | 27-01-2016 |
| | | JP 2016512856 A | 09-05-2016 |
| | | US 2015368409 A1 | 24-12-2015 |
| | | WO 2014146921 A1 | 25-09-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2742013 B1
- EP 1829839 A1
- EP 1138697 B1
- EP 1061089 B1